# EUROPÄISCHE PATENTSCHRIFT

(11) **EP 3 017 280 B1**
(45) Veröffentlichungstag und Bekanntmachung des Hinweises auf die Patenterteilung: **25.09.2019**
(21) Anmeldenummer: 14728554.8
(22) Anmeldetag: 04.06.2014
(51) Int. Cl.: G01F 23/284, H01Q 1/22, H01Q 1/42, H01Q 13/02, H01Q 15/08, H01Q 19/06

(54) **ANTENNENANORDNUNG FÜR EIN FÜLLSTANDSMESSGERÄT**
ANTENNA ASSEMBLY FOR A FILL-LEVEL MEASURING DEVICE
DISPOSITIF D'ANTENNE POUR APPAREIL DE MESURE DE NIVEAU

(30) Priorität: 03.07.2013 DE 102013106978
(43) Veröffentlichungstag der Anmeldung: 11.05.2016
(73) Patentinhaber: Endress+Hauser SE+Co. KG, 79689 Maulburg (DE)
(72) Erfinder: BLÖDT, Thomas, 79689 Maulburg (DE)
(74) Vertreter: Andres, Angelika Maria
(86) Internationale Anmeldenummer: PCT/EP2014/061618
(87) Internationale Veröffentlichungsnummer: WO 2015/000656

(56) Entgegenhaltungen:
- EP-A1- 1 336 224
- EP-A2- 1 211 490
- EP-B1- 1 485 683
- EP-B1- 1 485 683
- DE-A1-102005 036 844
- DE-A1-102005 036 844
- DE-A1-102005 056 042
- DE-A1-102005 056 042
- DE-A1-102006 003 742
- DE-T5-112004 001 988
- DE-T5-112004 001 988
- US-B1- 6 325 391

## Beschreibung

Die Erfindung betrifft eine Antennenanordnung für ein Füllstandsmessgerät zur Ermittlung und Überwachung eines Füllstands eines Mediums in einem Behälter gemäß dem Oberbegriff des Anspruchs 1.

Bei der Füllstandsmessung werden Mikrowellen mittels einer Antenne zur Oberfläche eines Füllguts gesendet, und die an der Oberfläche reflektierten Echowellen empfangen. Die Echowellen werden bevorzugt als eine Echofunktion dargestellt, aus der die Laufzeit bestimmt wird. Aus der Laufzeit wird der Abstand zwischen der Füllgutoberfläche und der Antenne bestimmt.

Es können alle bekannten Verfahren angewendet werden, die es ermöglichen, verhältnismäßig kurze Entfernungen mittels reflektierter Mikrowellen zu messen. Die bekanntesten Beispiele sind das Pulsradar und das Frequenzmodulations-Dauerstrichradar (FMCW-Radar).

Beim Pulsradar werden periodisch breitbandige Mikrowellen-Sendeimpulse, im Folgenden als Mikrowellen bezeichnet, gesendet, die von der Füllgutoberfläche reflektiert und nach einer abstandsabhängigen Laufzeit wieder empfangen werden. Die empfangene Signalamplitude als Funktion der Zeit stellt die Echofunktion dar. Jeder Wert dieser Echofunktion entspricht der Amplitude einer in einem bestimmten Abstand von der Antenne reflektierten Echowelle.

Beim FMCW-Verfahren wird eine kontinuierliche Mikrowelle gesendet, die periodisch linear frequenzmoduliert ist, beispielsweise nach einer Sägezahnfunktion. Die Frequenz des empfangenen Echosignals weist daher gegenüber der Augenblicksfrequenz, die das Sendesignal zum Zeitpunkt des Empfangs hat, eine Frequenzdifferenz auf, die von der Laufzeit des Echosignals abhängt. Die Frequenzdifferenz zwischen Sendesignal und Empfangssignal, die durch Mischung beider Signale und Auswertung des Fourierspektrums des Mischsignals gewonnen werden kann, entspricht somit dem Abstand der Oberfläche des Füllguts von der Antenne. Ferner entsprechen die Amplituden der Spektrallinien des durch Fouriertransformation gewonnenen Frequenzspektrums den Echoamplituden. Dieses Fourierspektrum stellt daher in diesem Fall die Echofunktion dar.

Mit Mikrowellen arbeitende Füllstandsmessgeräte werden in sehr vielen Industriezweigen, z. B. in der Chemie oder in der Lebensmittelindustrie, eingesetzt. Typischerweise ist der Füllstand in einem Behälter zu messen. Diese Behälter weisen üblicherweise eine Öffnung auf, an der ein Stutzen oder ein Flansch zur Befestigung von Messgeräten vorgesehen ist.

Je nach Anwendung werden in der Füllstandsmesstechnik üblicherweise Parabol-, Horn- oder Stab- oder Patchantennen eingesetzt. Die Hornantennen sind grundlegend so aufgebaut, dass an einen Hohlleiter in Füllgut-zugewandter Richtung ein trichterförmiges metallisches Horn ausgeformt ist. Der Aufbau einer Parabolantenne lässt sich vereinfacht so beschreiben, dass die Mikrowellen in einem Hohlleiter geführt, im Brennpunkt des Parabolspiegels direkt oder mittels eines Reflektors abgestrahlt und/oder wieder eingekoppelt werden. Eine Stabantenne besteht grundlegend aus einem Hohlleiter, der zumindest teilweise mit einem Stab aus einem Dielektrikum ausgefüllt ist und der in Füllgut-zugewandter Richtung eine Auskoppelungsstruktur in der Form eines Tapers oder eines Kegels aufweist. Diese drei freiabstrahlenden Antennentypen werden üblicherweise über eine Koaxialleitung gespeist, die an ein in den Hohlleiter hineinragendes Erregerelement angeschlossen ist.

Wählt man eine Hornantenne mit einer relativ großen Austrittsöffnung, ergeben sich weniger divergente Signalanteile. Man spricht von einer Bündelung in eine Abstrahlrichtung. Gebräuchliches Maß für die Bündelung ist die sog. "3 dB-Keulenbreite". Diese besagt, unter welchem Winkel der abgestrahlte bzw. empfangene Leistungsanteil der Mikrowellen gerade auf die Hälfte gegenüber dem maximalen Wert in Abstrahlrichtung abgefallen ist. Wählt man eine relativ große Austrittsöffnung der Hornantenne, ist die Länge der Hornantenne entsprechend anzupassen, um sogenannte "Nebenkeulen" zu verhindern. Nebenkeulen sind weitere Maxima der Leistungsanteile der Mikrowellen, die nicht in Abstrahlrichtung gerichtet sind.

Antennenanordnungen zur Füllstandmessung haben das Ziel, eine große Bündelungswirkung zu erreichen. Dies bedeutet, mehr Leistungsanteile gezielt in eine Abstrahlrichtung zu bündeln. Dies ist besonders vorteilhaft bei sehr großen Entfernungen zwischen der Antennenanordnung und dem Medium im Bereich von 30...80 m, sowie bei Oberflächen des Mediums, welche nur einen geringen Leistungsanteil in die Antenne zurückreflektieren. Gründe für einen geringen Anteil an zurückreflektierten Leistungsanteilen können eine kleine Dielektrizitätszahl des Mediums sein, bei dem die Mikrowellen transmittiert werden, Absorption bei Schüttgütern, sowie eine wellige Oberfläche, wodurch Leistungsanteile in andere Richtungen als in Richtung der Antennenanordnung zurückreflektiertet werden (beispielsweise in Verbindung mit einem Rührwerk).

Ist in dem Behälter ein Rührwerk angeordnet, das zur Ablenkung der Mikrowellen in andere Richtungen führt als die Abstrahlrichtung, lässt sich dies mit einer Hornantenne geringer Bündelungswirkung abschwächen. Darüber hinaus besteht aus Kostengründen Interesse an Hornantennen mit kleineren Horndurchmessern, insbesondere bei Hornantennen aus Edelstahl. Da die Montage üblicherweise außerhalb des Behälters stattfindet, wird der maximal mögliche Horndurchrnesser weiterhin durch den Flanschdurchmesser festgelegt, da das Horn bei dieser Montage durch diesen hindurch bewegt werden muss.

Die EP 1 485 683 B1 beschreibt eine Hornantenne für ein Radar-Füllstandsmessgerät zum Bestimmen eines Füllstands eines Mediums in einem Behälter. Die Hornantenne umfasst ein erstes leitfähiges Gehäuse, dessen innenraum mit einem dielektrischen Körper ausgefüllt ist. Ein zweites leitfähiges Gehäuse verlängert das erste Gehäuse in Abstrahlrichtung der Mikrowellen.

Da das zweite Gehäuse der Hornantenne elektrisch leitfähig und mit dem ersten Gehäuse elektrisch verbunden ist, kann ab einer bestimmten Füllhöhe des Mediums in dem Behälter eine elektrisch leitfähige Verbindung zwischen der Hornantenne und dem Medium, sowie eine elektrisch leitfähige Verbindung zwischen der Hornantenne und dem Behälter entstehen. Dies kann zu sog. "Brumm-Schleifen", aber auch zu Kurzschlüssen und Explosionen führen.

In der Offenlegungsschrift DE 10 2005 036 844 A1 wird ein Radarsensor beschrieben, dessen Antenne galvanisch von der Hohlleiterstruktur, die sich auf dem Sensorchip befindet, getrennt ist.

Ein weitergehender Ansatz ist in dem Gebrauchsmuster DE 11 2004 001 988 T5 vorgestellt : Hier ist die galvanische Trennung als vollflächige Membran innerhalb der Hohlleiterstruktur ausgebildet und stellt somit zusätzlich einen Schutz der innenliegenden Hohlleiterstruktur dar.

Die Patentanmeldung DE 10 2006 003 742 A1 beschreibt eine Hornantenne mit einer Prozesstrennung für ein Füllstandsmessgerät. Die Prozesstrennung umfasst hierbei im Inneren einen Hohlraum oder ein zweites Material zur Optimierung der Abstrahlungscharakteristik.

Eine kunststoffbasierte Hornantenne, dessen Innenseite metallisiert ist und zur Verwendung in Füllstandsmessgeräten gedacht ist, wird in der Offenlegungsschrift DE 10 2005 056 042 A1 gezeigt.

In der internationalen Anmeldungsschrift WO 02/41446 wird eine Antenne für ein Füllstandsmessgerät beschrieben, die aus einem sich konisch aufweitenden Hohlleiter, besteht. Dabei ist der innenliegende Hohlleiter komplett geschlossen und aus einem dielektrischen Material gefertigt.

Ein alternativer Ansatz hierzu ist in der Patentschrift US 6,325,391 aufgezeigt Dort ist die Hornantenne oberhalb des Füllgut-Behälters in einem Rohr angebracht und mittels Flanschen mit dem Behälter-Inneren verbunden. Zwischen dem Flanschen ist eine dielektrische Schutztrennung angebracht, um die Hornantenne bzw. das Füllstandsmessgerät von dem Behälter-Inneren zu trennen.

Die EP 1 211 490 A2 offenbart ein Füllstandmessgerät nach dem Radarprinzip, das zur räumlichen Trennung zwischen dem Hohlleiter und der hornförmigen Komponente eine Durchlassscheibe vorsieht.

Aufgabe der Erfindung ist es, eine Antennenanordnung für ein Füllstandmessgerät bereitzustellen, die erhöhte Sicherheit bietet.

Die Aufgabe wird durch den Gegenstand des Anspruchs 1 gelöst. Der Gegenstand der Erfindung betrifft eine Antennenanordnung für ein Füllstandsmessgerät zur Ermittlung und Überwachung eines Füllstands eines Mediums in einem Behälter mittels eines Mikrowellen-Laufzeitmessverfahrens, umfassend eine Hornantenne mit einer hornförmigen Komponente zur Bündelung der Mikrowellen und ein mikrowellen-durchlässiges Prozesstrennelement, das im Bereich der dem Medium zugewandten Austrittsöffnung der hornförmigen Komponente vorgesehen ist und das den Innenraum der hornförmigen Komponente von dem Innenraum des Behälters trennt, wobei eine Verlängerungskomponente zur weiteren Bündelung der Mikrowellen vorgesehen ist, welche die hornförmige Komponente in Abstrahlrichtung der Mikrowellen verlängert, wobei das Prozesstrennelement derart ausgestaltet und angeordnet ist, dass es die hornförmige Komponente und die Verlängerungskomponente galvanisch voneinander trennt.

Durch die galvanische Trennung zwischen der Verlängerungskomponente und der hornförmigen Komponente liegt die Verlängerungskomponente nicht wie die hornförmige Komponente auf ein Massenpotential. Elektrische Ladungen der Verlängerungskomponente können nicht mehr über das Massepotential abfließen, wodurch die Sicherheit der Antennenanordnung erhöht wird.

Gemäß einer Weiterbildung ist die Hornantenne zumindest teilweise in einem Gehäuse angeordnet, wobei die Verlängerungskomponente mindestens eine Befestigungskomponente aufweist, und wobei die Verlängerungskomponante mittels der mindestens einen Befestigungskomponente an dem Gehäuse befestigt ist.

Gemäß einer Weiterbildung ist das Prozesstrennelement im Wesentlichen scheibenförmig ausgestaltet und in radialer Richtung größer dimensioniert als die Austrittsöffnung der hornförmigen Komponente. Vorteilhaft an dieser Ausgestaltung ist, dass das Prozesstrennelement die hornförmige Komponente und die Verlängerungskomponente galvanisch trennt.

Gemäß einer Weiterbildung ist das Prozesstrennelement in einem Randbereich an dem Gehäuse befestigt. Vorteilhaft an dieser Ausgestaltung ist, dass ein Innenraum des Gehäuses von einem Innenraum des Behälters getrennt ist.

Gemäß einer Weiterbildung ist der mindestens einen Befestigungskomponente mindestens ein elektrisch leitender Hohlzylinder zugeordnet, welcher das Prozesstrennelement in radialer Richtung umgibt, so dass Mikrowellen, die in radialer Richtung aus dem Randbereich des Prozesstrennetements austreten, näherungsweise verlustfrei zurückreflektiert werden.

In einer weiteren Ausgestaltungsform ist der mindestens einen Befestigungskomponente mindestens ein ringförmiger Hohlraumresonator zugeordnet, welcher das Prozesstrennelement in radialer Richtung umgibt, und so dimensioniert ist, dass Mikrowellen, die in radialer Richtung aus dem Randbereich des Prozesstrennelement austreten, näherungsweise verlustfrei zurückreflektiert werden.

Gemäß einer Weiterbildung ist der Hohlzylinder oder der Hohlraumresonator dermaßen ausgestaltet, dass Mikrowellen, die aus dem Randbereich des Prozesstrennelements austreten, nach einem ganzzahligen Vielfachen der halben Wellenlänge an einer Innenwandung des Hohlzylinders oder des Hohlraumresonators zurückreflektiert werden.

Gemäß einer Weiterbildung ist die Verlängerungskomponente dermaßen hornförmig ausgebildet, dass die Verlängerungskomponente mit der hornförmigen Komponente fluchtet.

Erfindungsgemäß ist die Verlängerungskomponente hornförmig ausgebildet und weist einen Öffnungswinkel auf, der annähernd einem Öffnungswinkel der hornförmigen Komponente entspricht, und die Verlängerungskomponente weist eine Eintrittsöffnung auf, die kleiner ist. als die Austrittsöffnung der hornförmigen Komponente.

Alternativ kann der Öffnungswinkel der Verlängerungskomponente abweichend von dem Öffnungswinkel der hornförmigen Komponente gewählt werden. Vorteilhaft ist insbesondere ein zunehmender Öffnungswinkel mit zunehmender Aufweitung der Verlängerungskomponente- Beispielsweise kann der Öffnungswinkel der hornförmigen Verlängerungskomponente größer gewählt werden als der Öffnungswinkel der hornförmigen Komponente.

In einer weiteren Ausgestaltungsform ist die Verlängerungskomponente hohlzylinderförmig ausgebildet, wobei die Verlängerungskomponente eine Eintrittsöffnung aufweist, deren Durchmesser kleiner ist als der Durchmesser der Verlängerungskomponente, wobei die Verlängerungskomponente im Randbereich der Eintrittsöffnung an dem Randbereich des Prozesselements befestigt ist, so dass die Verlängerurigskomponente eine Stufe in Abstrahlrichtung aufweist.

Gemäß einer Weiterbildung ist die Verlängerungskomponente dermaßen dimensioniert, dass eine TM₁₁-Mode mit einem ringförmigen Bereich, in dem die Feldstärke minimal ist, erzeugt wird, und dass der ringförmige Bereich einen Durchmesser aufweist, der annähernd dem Durchmesser des Prozesstrennelements entspricht.

Gemäß einer Weiterbildung weist die Verlängerungskomponente eine Länge von mindestens dem achtfachen, bevorzugt mindestens dem sechzehnfachen der Wellenlänge der Mikrowellen auf. Durch diese Dimensionierungen liegen an einer Austrittsöffnung der Verlängerungskomponente eine TE₁₁-Mode und eine TM₁₁-Mode in geeigneten Leistungsanteilen vor, um zusammenwirkend eine annähernd linear polarisierte Feldverteilung zur stärkeren Bündelung auszubilden.

Gemäß einer Weiterbildung weist die Verlängerungskomponente einen Durchmesser von höchstens dem dreifachen des Durchmessers des Prozesstrennelements und mindestens dem dreifachen des Durchmessers der Austrittsöffnung der hornförmigen Komponente auf. Durch diese Dimensionierungen liegen an einer Austrittsöffnung der Verlängerungskomponente eine TE₁₁-Mode und eine TM₁₁-Mode in geeigneten Leistungsanteilen vor, um eine annähernd linear polarisierte Feldverteilung zur stärkeren Bündelung auszubilden.

Gemäß einer Weiterbildung ist eine Austrittsöffnung der Verlängerungskomponente zur weiteren Bündelung der Mikrowellen hornförmig ausgebildet, oder sie weist die Form eines Exponentiaftrichters auf.

Gemäß einer Weiterbildung umfasst das Prozesstrennelement eine dielektrische Linse zur weitergehenden Bündelung der Mikrowellen.

Die Aufgabe der Erfindung wird ebenfalls durch ein Füllstandsmessgerät zur Ermittlung und Überwachung eines Füllstands eines Mediums in einem Behälter mittels eines Mikrowellen-Laufzeitmessverfahrens, umfassend einen Messumformer und eine erfindungsgemäße Antennenanordnung, gelöst.

Die Erfindung wird anhand der nachfolgenden Figuren näher erläutert. Es zeigt
Fig. 1: eine Antennenanordnung umfassend eine Hornantenne mit einem Rundhohileiter nach dem Stand der Technik,
Fig. 2: eine Antennenanordnung umfassend eine Hornantenne mit einem Rundhohlleiter und Flansch nach dem Stand der Technik,
Fig. 3: eine Antennenanordnung umfassend eine Hornantenne mit einer hornförmigen Komponente und einem Prozesstrennelement nach dem Stand der Technik,
Fig. 4: eine TE₁₁-Mode in einem Rundhohlleiter,
Fig. 5a: eine Antennenanordnung mit einer homförmigen Komponente und einer Verlängerungskomponente, die mit der hornförmigen Komponente fluchtet,
Fig. 5b; eine erfindungsgemäße Antennenanordnung mit einer hornförmigen Komponente und einer Verlängerungskomponente, die zur hornförmigen Komponente versetzt angeordnet ist,
Fig. 6a: eine erfindungsgemäße Antennenanordnung mit einem Prozesstrennelement, in dem eine dielektrische Linse angeordnet ist,
Fig. 6b: eine erfindungsgemäße Antennenanordnung, bei der eine Verlängerungskomponente mittels eines Befestigungselements an einem Gehäuse befestigt ist,
Fig. 7a: eine erfindungsgemäße Antennenanordnung mit einem Hohlraumresonator, in dem es parallel zur Abstrahlrichtung zur konstruktiven Interferenz kommt,
Fig. 7b: eine erfindungsgemäße Antennenanordnung mit einem Hohlraumresonator, in dem es senkrecht zur Abstrahlrichtung zur konstruktiven Interferenz kommt,
Fig. 8a: eine TE₁₁-Mode in einer hohlzylinderförmigen Verlängerungskomponente,
Fig. 8b: eine TM₁₁-Mode in einer hohlzylinderförmigen Verlängerungskomponente,
Fig. 8c: eine Überlagerung einer TE₁₁-Mode mit einer TM₁₁-Mode in einer hohlzylinderförmigen Verlängerungskomponente,
Fig. 9: eine Antennenanordnung mit einer hohlzylinderförmigen Verlängerungskomponente,
Fig. 10: eine Antennenanordnung mit einer hohlzylinderförmigen Verlängerungskomponente und einer Austrittsöffnung, welche die Form eines Exponentialtrichters aufweist.

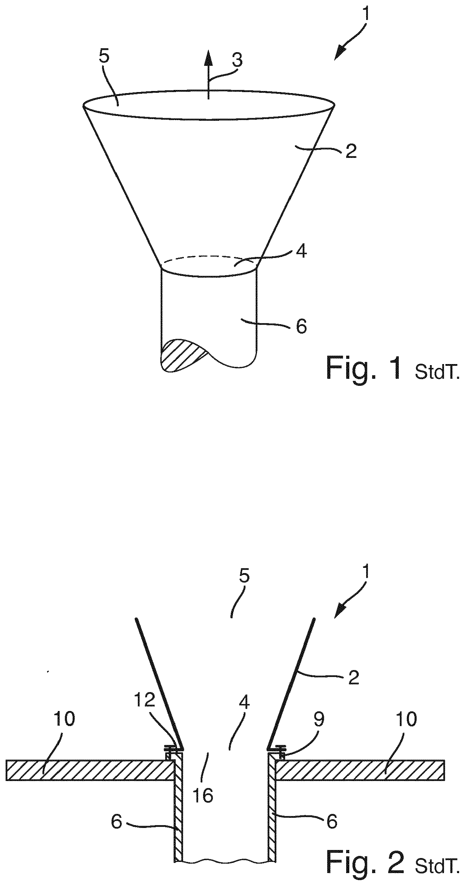

Fig. 1 zeigt eine Antennenanordnung 1 für ein Füllstandsmessgerät zur Ermittlung und Überwachung eines Füllstands eines Mediums in einem Behälter mittels eines Mikrowellen-Laufzeitmessverfahrens mit einer Hornantenne zur Bündelung der Mikrowellen. Die Hornantenne besteht aus einer hornförmigen Komponente 2, die konisch ausgebildet ist und eine kreisförmige Querschnittsfläche aufweist. Der Querschnitt weitet sich in Abstrahlrichtung 3 auf, so dass eine Eintrittsöffnung 4 der hornförmigen Komponente 2 kleiner ausgebildet ist als eine Austrittsöffnung 5 der hornförmigen Komponente 2. Diese Autweitung erreicht einen möglichst reflexionsfreien Übergang von der Eintrittsöffnung 4 zur Austrittsöffnung 5 der hornförmigen Komponente 2.

Die Eintrittsöffnung 4 der hornförmigen Komponente 2 ist mit einem Rundhohlleiter 6 verbunden, wobei der Rundhohlleiter 6 mit einer Elektronik verbunden ist. Die Elektronik erzeugt ein elektrisches Signal, das in dem Rundhohlleiter 6 in Mikrowellen umgewandelt wird, wobei die Mikrowellen mittels der hornförmigen Komponente 2 abgestrahlt werden. Ein großer Teil der Mikrowellen wird parallel zu einer Normalen der Austrittsöffnung 5 abgestrahlt, wobei diese Richtung als Abstrahlrichtung 3 bezeichnet wird.

Wird die Aufweitung der hornförmigen Komponente 2 möglichst groß gewählt, ergibt sich eine sehr plane Feldverteilung der abgestrahlten Mikrowelle, bei dem nur ein sehr kleiner Teil der Mikrowellen nicht in Abstrahlrichtung 3 abgestrahlt wird,

Fig. 2 zeigt eine weitere Ausgestaltung einer Antennenanordnung 1 nach dem Stand der Technik, bei dem der Rundhohlleiter 6 an einer Austrittsöffnung 16 außenseitig einen Rohrflansch 9 aufweist. Die hornförmige Komponente 2 weist an einer Eintrittsöffnung 4 einen Außenflansch 12 auf, der passend zu dem Rohrflansch 9 des Rundhohlleiters 6 ausgebildet ist. Der Rohrflansch 9 des Rundhohlleiters 6 und der Außenflansch 12 der hornförmigen Komponente 2 sind mittels Schrauben 31 verbunden. Des Weiteren ist der Rundhohlleiter 6 in einer Öffnung eines Flansches 10 angeordnet. Mittels des Flansches 10 kann die Antennenanordnung 1 an einem Behälter befestigt werden.

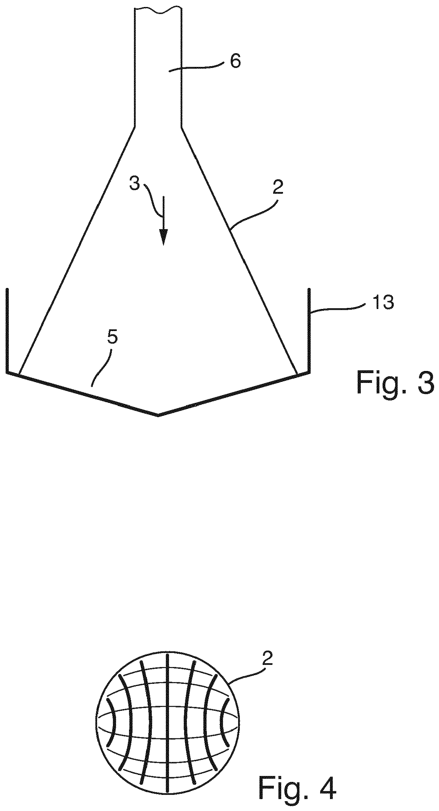

Fig. 3 zeigt ein weiteres AusfUhrungsbeispiel einer Antennenanordnung 1 aus dem Stand der Technik. Eine homförmige Komponente 2 einer Hornantenne ist elektrisch mit einem Rundhohlleiter 6 verbunden. Der Rundhohlleiter 6 ist mit einer nicht dargestellten Elektronik verbunden. Eine Austrittsöffnung 5 der hornförmigen Komponente 2 ist. mittels eines Prozesstrennelements 13 verschlossen, so dass der Innenraum der hornförmigen Komponente 2 von dem Innenraum des Behälters getrennt ist. Das Prozesstrennelement 13 ist scheibenförmig ausgestaltet und in radialer Richtung größer dimensioniert als die Austrittsöffnung 5 der Hornantenne 2.

Fig. 4 zeigt eine TE₁₁-Mode in einem Rundhohlleiter 2. Da der Rundhohlleiter 6 elektrische leitfähig ist weist die TE₁₁-Mode große Feldanteile in der Nähe des Rundhohlleiters 2 auf.

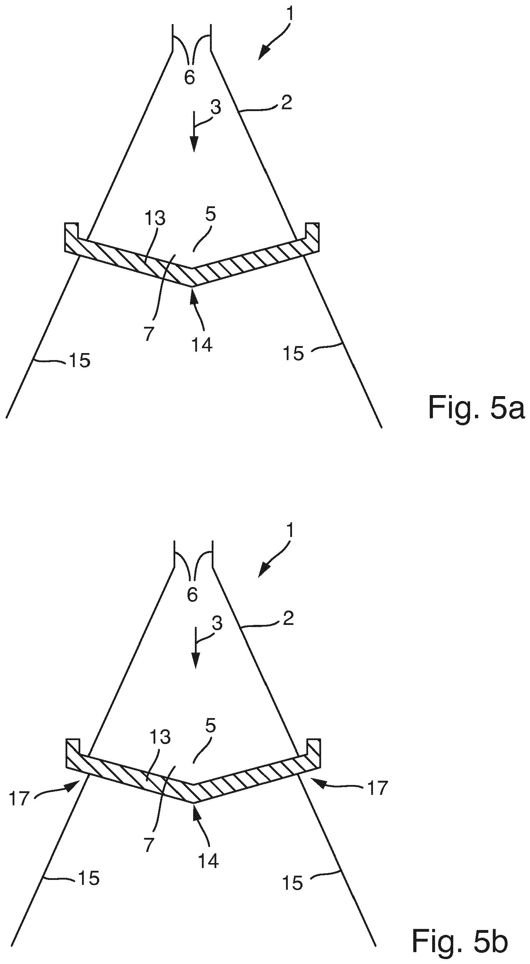

Fig. 5a zeigt eine Antennenanordnung 1. Eine Hornantenne besteht aus einer hornförmigen Komponente 2 und einem Prozesstrennelement 13, das eine Austrittsöffnung 5 der hornförmigen Komponente 2 verschließt. Die hornförmige Komponente 2 befindet sich in einem Gehäuse (in Fig. 5 nicht dargestellt). Die Antennenanordnung 1 weist weiterhin eine Verlängerungskomponente 15 zur weiteren Bündelung der Mikrowellen auf, welche die hornförmige Komponente 2 in Abstrahlrichtung 3 der Mikrowellen verlängert. Erfindungsgemäß ist das Prozesstrennelement 13 derart ausgestaltet und angeordnet, dass es die hornförmige Komponente 2 und die Verlängerungskomponente 15 galvanisch voneinander trennt.

Das Prozesstrennelement 13 ist für Mikrowellen durchlässig. Es besteht aus einem bevorzugt für Mikrowellen durchlässiges Material, wie z. B. Teflon oder bevorzugt undotiertes PP. Eine Dicke des Prozesstrennelements 13 orientiert sich nach Vorschriften, wie beispielsweise Vorschriften bezüglich Stabilität (VDE) oder bezüglich des Explosionsschutzes (ATEX).

Die hornförmige Komponente 2 besteht aus einem dünnen Blech, beispielsweise Messing oder einem leitfähigen Kunststoff oder einem Kunststoff, der an seiner Oberfläche metallisiert ist. Aus fertigungstechnischen Gründen ist die hornförmige Komponente 2 drehsymmetrisch und einstückig mit dem Rundhohlleiter 6 ausgebildet. Die hornförmige Komponente 2 und/oder der Rundhohlleiter 2 können jedoch auch oval oder elliptisch ausgebildet sein. Abhängig davon, auf welche Weise die Mikrowellen in den Rundhohlleiter 6 einkoppeln, ist eine elliptische hornförmige Komponente 2 und/oder ein elliptischer Rundhohtleiter 6 vorteilhaft. Durch eine elliptische hornförmige Komponente 2 lässt sich eine Bündelung in eine Richtung, die nicht der Abstrahlrichtung 3 entspricht, korrigieren. Solch eine Bündelung in eine ungewünschte Richtung ergibt sich üblicherweise bei Hornantennen, bei denen die hornförmige Komponente 2 relativ klein im Vergleich zur Wellenlänge ausgestaltet ist. Die Bündelung in eine ungewünschte Richtung wird im Wesentlichen bei der Einkopplung der Mikrowellen verursacht.

Ferner weist das Prozesstrennelement 13 in Abstrahlrichtung 3 eine Zuspitzung 14 auf. Bildet sich Kondensat des Mediums auf dem Prozesstrennelement 13, tropft das Kondensat über die Zuspitzung 14 ab. Auf diese Weise reduziert sich das Kondensat des Mediums auf dem Prozesstrennelement 13.

Die Verlängerungskomponente 15 ist hornförmig ausgebildet und weist einen Öffnungswinkel auf, der mit dem Öffnungswinkel der hornförmigen Komponente 2 übereinstimmt. Eine Eintrittsöffnung 7 der Verlängerungskomponente 15 ist passend zu einer Austrittsöffnung 5 der hornförmigen Komponente 2 ausgestaltet, so dass die hornförmige Komponente 2 mit der Verlängerungskomponente 15 fluchtet

Fig. 5b zeigt eine Ausgestaltung einer erfindungsgemäßen Antennenanordnung 1 entsprechend Fig. 5a, bei dem die hornförmige Komponente 2 und die Verlängerungskomponente 15 zwar einen identischen Öffnungswinkel aufweisen, jedoch ist eine Eintrittsöffnung 7 der Verlängerungskomponente 15 kleiner ausgestaltet als eine Austrittsöffnung 5 der hornförmigen Komponente 2. Dies führt zu einer Versetzung 17 der Verlängerungskomponente 15 gegenüber der hornförmigen Komponente 2. Die Versetzung 17 führt dazu, dass Mikrowellen seitlich abgestrahlt werden sowie Reflexionen erleiden, die zu einer Beeinträchtigung des Antennengewinns um ca. 1 - 2 dB führen.

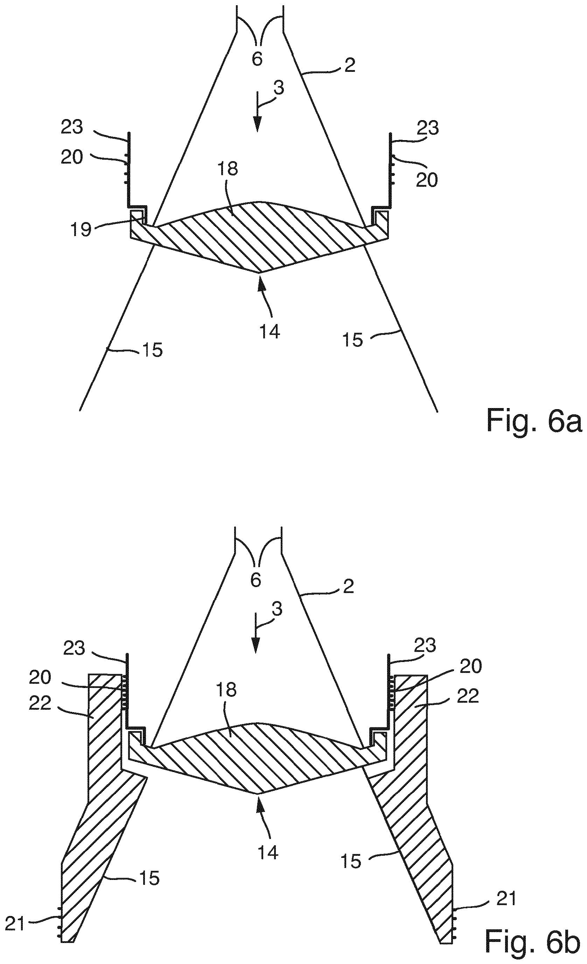

Fig. 6a zeigt eine weitere Ausgestaltung einer erfindungsgemäßen Antennenanordnung 1 mit einem Prozesstrenneiement 13, in dem eine dielektrische Linse 18 angeordnet ist. Dadurch lässt sich der Antennengewinn verbessern. Die Linse 18 besteht beispielsweise aus Teflon, Polypropylen (PP), Polyetheretherketon (PEEK), Polyethylen (PE) oder Ethylen-Tetrafluorethylen (ETFE). Alternativ kann die Linse 18 auf dem Prozesstrennelement 13 angeordnet sein. In diesem Fall kann die hornförmige Komponente 2 mit einem Dielektrikum gefüllt werden. Dies begünstigt insbesondere die Robustheit gegen das Kondensat des Mediums, was den Einsatzbereich einer preisgünstigen Antennenanordnung 1 im Abwasserbereich begünstigt.

Ferner ist die hornförmige Komponente 2 in einem Gehäuse 23 angeordnet. Das Prozesstrennelement 13 ist mithilfe eines ersten Gewindes 19 auf das Gehäuse 23 aufgeschraubt. Das Gehäuse 23 weist ein zweites Gewinde 20 zum Verschrauben an einen Flansch auf.

Fig. 6b zeigt eine weitere Ausgestaltung einer erfindungsgemäßen Antennenanordnung 1, bei dem die Verlängerungskomponente 15 mittels einer Befestigungskomponente 22 an das zweite Gewinde 20 geschraubt ist. Weiterhin weist die Befestigungskomponente 22 ein drittes Gewinde 21 zur Montage an einen Flansch auf.

Die Befestigungskomponente 22 und die Verlängerungskomponente 15 sind aus einem einstückigen Blech oder einem elektrisch leitfähigen Kunststoff ausgebildet. Die Verlängerungskomponente 15 kann jedoch auch aus einem Material bestehen, das lediglich an der Oberfläche elektrisch leitfähig ist, wie beispielsweise einem Kunststoff mit einer Oberflächenmetallisierung. Ferner können die hornförmige Komponente 2, die Verlängerungskomponente 15 und der Rundhohlleiter 6 aus unterschiedlichen Materialien bestehen. Sie müssen lediglich untereinander eine elektrische Verbindung aufweisen.

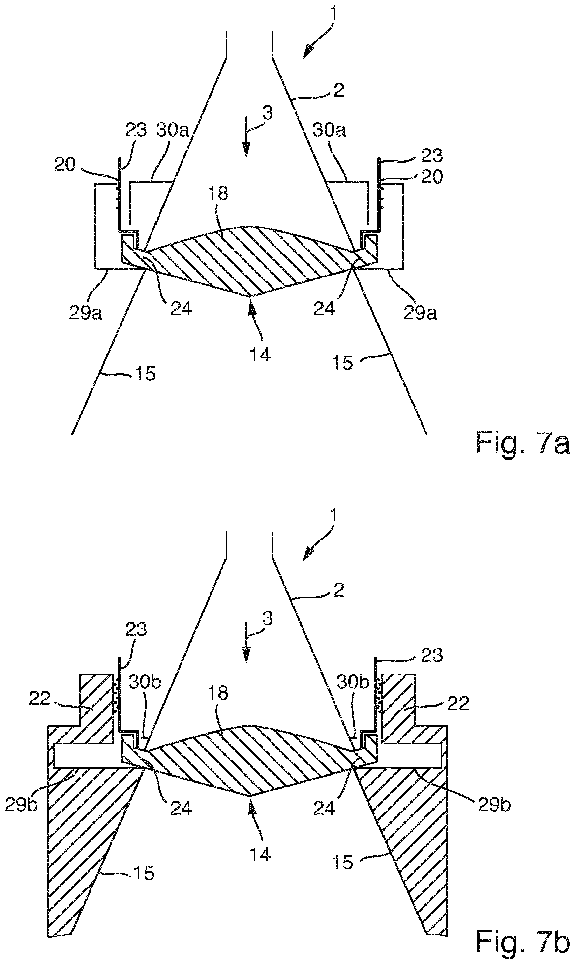

Fig. 7a zeigt eine Ausgestaltung einer erfindungsgemäßen Antennenanordnung 1, bei der die Befestigungskomponente 22 einen ringförmigen Hohlraumresonator 29a aufweist- Der Hohlraumresonator 29a umgibt das Prozesstrennelement 13 in radialer Richtung, so dass Mikrowellen, die in radialer Richtung aus dem Randbereich des Prozesstrennelement 13 austreten, näherungsweise veriustfrei zurückreflektiert werden.
Der Hohlraumresonator 29a ist dermaßen ausgestaltet, dass Mikrowellen, die aus dem Randbereich des Prozesstrennelements 13 austreten, nach einem ganzzahligen Vielfachen der halben Wellenlänge der Mikrowellen an einer Innenwandung des Hohlraumresonators 29a zurückreflektiert werden.

Die Mikrowellen, die aus dem Randbereich des Prozesstrennelements 13 austreten, überlagern sich mit den Mikrowellen, die an einer Innenwandung des Hohlraumresonators 29a zurückreflektiert werden. Da der Abstand zwischen dem Randbereich des Prozesstrenneiements 13 und der Innenwandung des Hohlraumresonators 29a ein ganzzahliges Vielfaches der halben Wellenlänge beträgt, ergibt sich konstruktive Interferenz aus den austretenden Mikrowellen und den reflektierten Mikrowellen und ein Großteil der aus dem Prozesstrennelement 13 ausgetretenen Mikrowellen wird zurück in das Prozesstrenneiement 13 reflektiert.

Das Gehäuse 23 ist aus Kunststoff gefertigt und elektrisch nicht leitfähig. Daher ergibt sich, bezogen auf die elektrische Leitfähigkeit, ein ringförmiger Spalt 24, durch den ein geringerer Teil der Mikrowellen austritt. Dieser geringe Teil der Mikrowellen wird durch einen zusätzlichen Hohlraumresonator 30a, der wie der Hohlraumresonator 29a agiert, nach einem ganzzahligen Vielfachen der halben Wellenlänge in das Prozesstrennelement 13 zurück reflektiert.

In dem Ausführungsbeispiel entsprechend Fig. 7a ist die Strecke in dem Hohlraumresonator 29a, in dem es zur konstruktiven Interferenz kommt parallel zur Abstrahlrichtung 3 angeordnet.

Fig. 7b zeigt eine weitere Ausgestaltung der erfindungsgemäßen Antennenanordnung 1 ähnlich der Ausgestaltung in Fig. 7a. Unterschiedlich ist, dass das Gehäuse 23 aus einem elektrisch leitfähigen Material ausgebildet ist, wodurch ein ringförmiger Spalt 24 bezüglich der elektrischen Leitfähigkeit kleiner ausfällt als bei der Ausgestaltung entsprechend Fig. 7a, Dem entsprechend ist ein zusätzlicher Hohlraumresonator 30b kleiner ausgestaltet als der zusätzliche Hohlraumresonator 30b in der Ausgestaltung entsprechend Fig, 7a. Ferner ist bei dieser Ausgestaltung die Strecke in dem Hohlraumresonator 29b, in dem es zur konstruktiven Interferenz kommt, senkrecht zur Abstrahlrichtung 3 angeordnet.

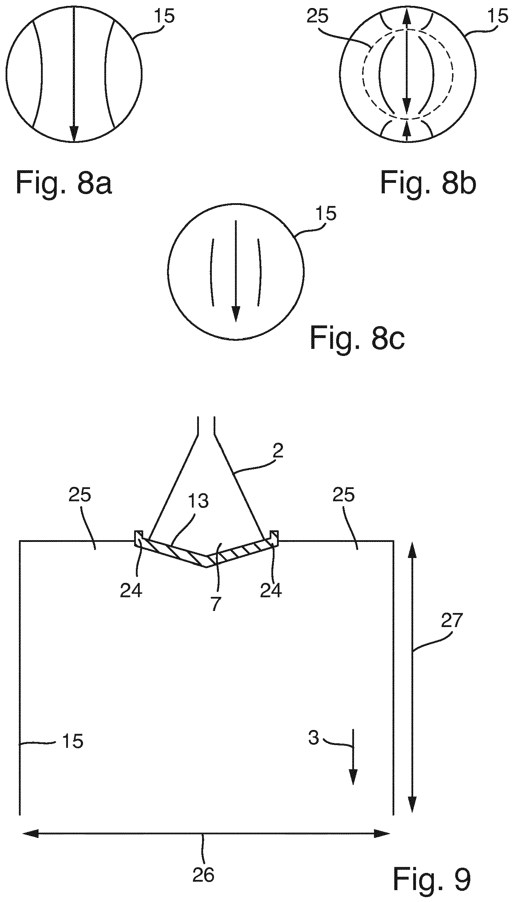

Fig. 8a zeigt eine TE₁₁-Mode in einer hohlzylinderförmigen Verlängerungskomponente 15.

Fig. 8b zeigt eine TM₁₁-Mode in einer hohlzylinderförmigen Verlängerungskomponente 15. Die TM₁₁-Mode weist einen ringförmigen Bereich 25 auf, in dem die Feldstärke minimal ist.
Fig. 8c zeigt eine Überlagerung einer TE₁₁-Mode mit einer TM₁₂-Mode in einer hohlzylinderförmigen Verlängerungskomponente 15, die mit bestimmten Leistungsanteilen überlagert wurden. Die Überlagerung kommt einer idealen linearen Polarisation sehr nahe. Dadurch werden die Mikrowellen stärker in der Abstrahlrichtung 3 gebündelt.

Fig. 9 zeigt eine Ausgestaltung einer Antennenanordnung 1 mit einer hohizylinderförmigen Verlängerungskomponente 15. Die Verlängerungskomponente 15 weist eine Eintrittsöffnung 7 auf, deren Durchmesser kleiner ist als der Durchmesser 26 der Verlängerungskomponente 15, wobei die Verlängerungskomponente 15 im Randbereich der Eintrittsöffnung 7 an dem Randbereich des Prozesselements 13 befestigt ist, so dass die Veriängerungskomponente 15 eine Stufe in Abstrahlrichtung aufweist.

Eine Überlagerung einer TE₁₁-Mode wird mit einer TM₁₁-Mode entsprechend Fig. 8c in der Verlängerungskomponente 15 erzeugt. Aus diesem Grund ist die Verlängerungskomponente 15 dermaßen dimensioniert, dass der ringförmige Bereich 25 der TM₁₁-Mode (siehe Fig, 8b) einen Durchmesser aufweist, der annähernd dem Durchmesser des Prozesstrennelements 13 entspricht.

Da der Durchmesser des Prozesselements 13 nicht exakt mit dem ringförmigen Bereich 25 der TM₁₁-Mode übereinstimmt, werden unmittelbar nach dem Prozesstrennelement 13 mehrere Moden gebildet, welche in der hohlzylindrischen Verlängerungskomponente 15 nicht ausbreitungsfähig sind und in den energetisch günstigeren TE₂₂-Mode übergehen. Um dies zu verhindern, ist eine ausreichende Länge 27 der Verlängerungskomponente 15 notwendig, welche annähernd dem sechzehnfachen der Wellenlänge der Mikrowellen beträgt. Durch diese Dimensionierungen liegen an einer Austrittsöffnung der Verlängerungskomponente 15 die TE₁₁-Mode und die TM₁₁-Mode in geeigneten Leistungsanteilen vor, um eine erfindungsgemäße Feldverteilung gemäß Fig. 8c auszubilden, die in Abstrahlrichtung 3 abgestrahlt wird. Diese Antennenanordnung 1 zeichnet sich durch eine für den Durchmesser 26 sehr hohe Bündelung, einhergehend mit einem sehr hohen Gewinn, aus.

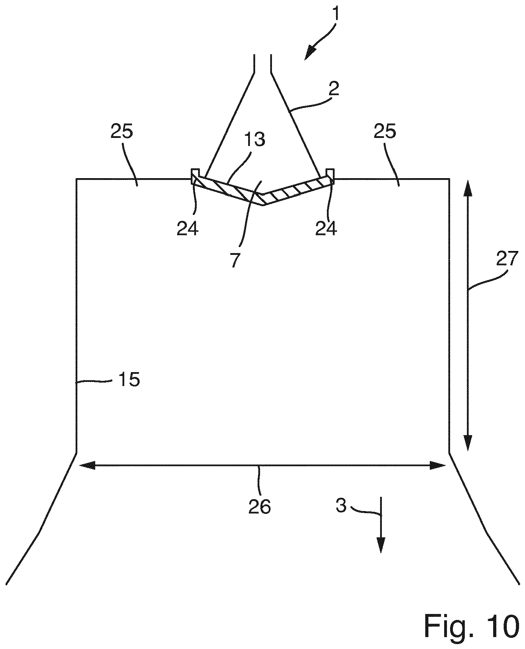

Fig. 10 zeigt eine Weiterbildung der Ausgestaltung der Antennenanordnung 1 entsprechend Fig. 9, bei dem eine Austrittsöffnung der Vertängerungskomponente 15 die Form eines Exponentialtrichters aufweist.

Alternativ kann die Verlängerungskomponente 15 zur Parallelisierung der Moden und somit zur weiteren Bündelung mehrere Stufen oder keine Stufen aufweisen.
Beispielsweise kann eine zweite Stufe als eine zweite hornförmige Verlängerungskomponente ausgebildet sein. Ein Öffnungswinkel der zweiten Verlängerungskomponente kann abweichend von dem Öffnungswinkel der ersten Verlängerungskomponente gewählt werden. Vorteilhaft ist insbesondere ein zunehmender Öffnungswinkel mit zunehmender Aufweitung.

### Bezugszeichenliste

- 1: Antennenanordnung
- 2: hornförmigen Komponente
- 3: Abstrahlrichtung
- 4: Eintrittsöffnung der hornförmigen Komponente
- 5: Austrittsöffnung der hornförmigen Komponente
- 6: Rundhohlleiter
- 7: Eintrittsöffnung der Verlängerungskomponente

- 9: Rohrflansch
- 10: Flansch
- 12: Außenflansch
- 13: Prozesstrennelement
- 14: Zuspitzung
- 15: Verlängerungskomponente
- 16: Austrittsöffnung des Rundhohlleiters 6
- 17: Versetzung
- 18: Linse
- 19: Erstes Gewinde
- 20: Zweites Gewinde
- 21: Drittes Gewinde
- 22: Befestigungskomponente
- 23: Gehäuse
- 24: Ringförmiger Spalt
- 25: Ringförmiger Bereich
- 26: Durchmesser der Verlängerungskomponente
- 27: Länge der Verlängerungskomponente

- 29a,b: Hohlraumresonator
- 30a,b: Zusätzlicher Hohlraumresonator
- 31: Schrauben

## Patentansprüche

1. Antennenanordnung für ein Füllstandsmessgerät zur Ermittlung und Überwachung eines Füllstands eines Mediums in einem Behälter mittels eines Mikrowellen-Laufzeitmessverfahrens, umfassend eine Hornantenne mit einer hornförmigen Komponente (2) zur Bündelung der Mikrowellen und ein mikrowellen-durchlässiges Prozesstrennelement (13), das im Bereich der dem Medium zugewandten Austrittsöffnung (5) der hornförmigen Komponente (2) vorgesehen ist, und das den Innenraum der hornförmigen Komponente (2) von dem Innenraum des Behälters trennt, wobei eine Verlängerungskomponente (15) zur weiteren Bündelung der Mikrowellen vorgesehen ist, welche die hornförmige Komponente (2) in Abstrahlrichtung (3) der Mikrowellen verlängert,
wobei das Prozesstrennelement (13) derart ausgestaltet und angeordnet ist, dass es die hornförmige Komponente (2) und die Verlängerungskomponente (15) galvanisch voneinander trennt, wobei die Verlängerungskomponente (15) hornförmig ausgebildet ist und einen Öffnungswinkel aufweist, der annähernd einem Öffnungswinkel der hornförmigen Komponente (2) entspricht,
**dadurch gekennzeichnet,**
**dass** die Verlängerungskomponente (15) eine Eintrittsöffnung (7) aufweist, die kleiner ist als die Austrittsöffnung (5) der hornförmigen Komponente (2).

2. Antennenanordnung nach Anspruch 1, wobei die Hornantenne zumindest teilweise in einem Gehäuse (23) angeordnet ist, wobei die Verlängerungskomponente (15) mindestens eine Befestigungskomponente (22) aufweist, und wobei die Verlängerungskomponente (15) mittels der mindestens einen Befestigungskomponente (22) an dem Gehäuse (23) befestigt ist.

3. Antennenanordnung nach Anspruch 1 oder 2, wobei das Prozesstrennelement (13) im Wesentlichen scheibenförmig ausgestaltet ist und in radialer Richtung größer dimensioniert ist als die Austrittsöffnung (5) der hornförmigen Komponente (2).

4. Antennenanordnung nach mindestens einem der vorhergehenden Ansprüche, wobei das Prozesstrennelement (13) in einem Randbereich an dem Gehäuse (23) befestigt ist.

5. Antennenanordnung nach einem der Ansprüche 1 bis 4, wobei der mindestens einen Befestigungskomponente (22) mindestens ein elektrisch leitender Hohlzylinder zugeordnet ist, welcher das Prozesstrennelement (13) in radialer Richtung umgibt, so dass Mikrowellen, die in radialer Richtung aus dem Randbereich des Prozesstrennelements (13) austreten, näherungsweise verlustfrei zurückreflektiert werden,

6. Antennenanordnung nach einem der Ansprüche 1 bis 4, wobei der mindestens einen Befestigungskomponente (22) mindestens ein ringförmiger Hohlraumresonator (29a,b) zugeordnet ist, welcher das Prozesstrennelement (13) in radialer Richtung umgibt, und so dimensioniert ist, dass Mikrowellen, die in radialer Richtung aus dem Randbereich des Prozesstrennelement (13) austreten, näherungsweise verlustfrei zurückreflektiert werden.

7. Antennenanordnung nach Anspruch 5 oder 6, wobei der Hohlzylinder oder der Hohlraumresonator (29a,b) dermaßen ausgestaltet ist, dass Mikrowellen, die aus dem Randbereich des Prozesstrennelements (13) austreten, nach einem ganzzahligen Vielfachen der halben Wellenlänge an einer Innenwandung des Hohlzylinders oder des Hohlraumresonators (29a,b) zurückreflektiert werden.

8. Antennenanordnung nach einem der vorhergehenden Ansprüche, wobei das Prozesstrennelement (13) eine dielektrische Linse (18) zur weitergehenden Bündelung der Mikrowellen umfasst.

9. Füllstandsmessgerät zur Ermittlung und Überwachung eines Füllstands eines Mediums in einem Behälter mittels eines Mikrowellen-Laufzeitmessverfahrens, umfassend einen Messumformer und eine Antennenanordnung (1), wie sie in mindestens einem der Ansprüche 1 bis 8 beschrieben ist.

## Claims

1. Antenna arrangement for a level transmitter designed to determine and monitor a level of a medium in a vessel using a microwave time-of-flight method, wherein said arrangement comprises a horn antenna with a horn-shaped component (2) designed to concentrate the microwaves and a process separation element (13) that is permeable to microwaves, said element being provided in the area of the outlet opening (5) of the horn-shaped component (2) facing towards the medium, and which separates the interior area of the horn-shaped component (2) from the interior area of the vessel, wherein an extension component (15) is provided for the further concentration of the microwaves, wherein said component extends the horn-shaped component (2) in the radiation direction (3) of the microwaves, wherein the process separation element (13) is designed and arranged in such a way that the horn-shaped component (2) and the extension component (15) are galvanically isolated from one another,
wherein the extension component (15) has a horn-like design and has an opening angle that corresponds approximately to an opening angle of the horn-shaped component (2),
**characterized in that**
the extension component (15) has an entrance opening (7) that is smaller than the outlet opening (5) of the horn-shaped component (2).

2. Antenna arrangement as claimed in Claim 1, wherein the horn antenna is at least partially arranged in a housing (23), wherein the extension component (15) has at least a fixing component (22), and wherein the extension component (15) is fixed on the housing (23) using the at least one fixing component (22).

3. Antenna arrangement as claimed in Claim 1 or 2, wherein the process separation element (13) is essentially designed in the form of a disc and in the radial direction is greater than the outlet opening (5) of the horn-shaped component (2).

4. Antenna arrangement as claimed in at least one of the previous claims, wherein the process separation element (13) is fixed on the housing (23) in a marginal area.

5. Antenna arrangement as claimed in at least one of the Claims 1 to 4, wherein the at least one fixing component (22) is assigned at least an electrically conductive hollow cylinder, wherein said cylinder surrounds the process separation element (13) in the radial direction in such a way that microwaves that emerge from the marginal area of the process separation element (13) in the radial direction are reflected back almost loss-free.

6. Antenna arrangement as claimed in at least one of the Claims 1 to 4, wherein the at least one fixing component (22) is assigned at least an circular cavity resonator (29a, b), wherein said resonator surrounds the process separation element (13) in the radial direction in such a way and is sized in such a way that microwaves that emerge from the marginal area of the process separation element (13) in the radial direction are reflected back almost loss-free.

7. Antenna arrangement as claimed in Claim 5 or 6, wherein the hollow cylinder or the cavity resonator (29a, b) is designed in such a way that microwaves that emerge from the marginal area of the process separation element (13) are reflected back to an inner wall of the hollow cylinder or cavity resonator (29a, b) following a whole-number multiple of the half wavelength.

8. Antenna arrangement as claimed in one of the previous claims wherein the process separation element (13) comprises a dielectric lens (18) for the further concentration of the microwaves.

9. Level transmitter for determining and monitoring a level of a medium in a vessel using a microwave time-of-flight method, comprising a transmitter and an antenna arrangement (1) as described in at least one of the Claims 1 to 8.

## Revendications

1. Arrangement d'antenne pour un transmetteur de niveau destiné à la détermination et la surveillance d'un niveau d'un produit dans un réservoir au moyen d'un procédé de mesure du temps de propagation de micro-ondes, lequel arrangement comprend une antenne cornet avec un composant en forme de cornet (2), destiné à la focalisation des micro-ondes et un élément séparateur de process (13) perméable aux micro-ondes, lequel élément est prévu dans la zone de l'ouverture de sortie (5) du composant en forme de cornet (2) faisant face au produit, et qui sépare l'espace intérieur du composant en forme de cornet (2) de l'espace intérieur du réservoir, un composant prolongateur (15) étant prévu pour une focalisation supplémentaire des micro-ondes, lequel composant prolonge le composant en forme de cornet (2) dans la direction du rayonnement (3) des micro-ondes,
l'élément séparateur de process (13) étant conçu et disposé de telle sorte que le composant en forme de cornet (2) et le composant prolongateur (15) soient isolés galvaniquement l'un de l'autre,
le composant prolongateur (15) étant conçu en forme de cornet et présentant un angle d'ouverture qui correspond approximativement à un angle d'ouverture du composant en forme de cornet (2),
**caractérisé**
**en ce que** le composant prolongateur (15) présente une ouverture d'entrée (7), qui est inférieure à l'ouverture de sortie (5) du composant en forme de cornet (2).

2. Arrangement d'antenne selon la revendication 1, pour lequel l'antenne cornet est disposée au moins partiellement dans un boîtier (23), le composant prolongateur (15) présentant au moins un composant de fixation (22), et le composant prolongateur (15) étant fixé au boîtier (23) au moyen de l'au moins un composant de fixation (22).

3. Arrangement d'antenne selon la revendication 1 ou 2, pour lequel l'élément séparateur de process (13) est conçu pour l'essentiel en forme de disque et présente dans la direction axiale des dimensions plus grandes que l'ouverture de sortie (5) du composant en forme de cornet (2).

4. Arrangement d'antenne selon au moins l'une des revendications précédentes, pour lequel l'élément séparateur de process (13) est fixé dans une zone marginale sur le boîtier (23).

5. Arrangement d'antenne selon au moins l'une des revendications 1 à 4, pour lequel est attribué, à l'au moins un composant de fixation (22), au moins un cylindre creux électriquement conducteur, lequel cylindre entoure l'élément séparateur de process (13) en direction radiale, de telle sorte que les micro-ondes, qui émergent en direction radiale de la zone marginale de l'élément séparateur de process (13), sont rétroréfléchis approximativement sans perte.

6. Arrangement d'antenne selon au moins l'une des revendications 1 à 4, pour lequel est attribué, à l'au moins un composant de fixation (22), au moins un résonateur à espace creux annulaire (29a, b), lequel résonateur entoure en direction axiale l'élément séparateur de process (13), et est dimensionné de telle sorte que les micro-ondes, qui émergent en direction radiale de la zone marginale de l'élément séparateur de process (13), sont rétroréfléchis approximativement sans perte.

7. Arrangement d'antenne selon la revendication 5 ou 6, pour lequel le cylindre creux ou le résonateur à espace creux annulaire (29a, b) est conçu de telle sorte que les micro-ondes, qui émergent en direction radiale de la zone marginale de l'élément séparateur de process (13), sont rétroréfléchis selon un multiple entier de la demi-longueur d'onde sur une paroi intérieure du cylindre creux ou du résonateur à espace creux (29a, b).

8. Arrangement d'antenne selon au moins l'une des revendications précédentes, pour lequel l'élément séparateur de process (13) comprend une lentille diélectrique (18) destinée à une focalisation supplémentaire des micro-ondes.

9. Transmetteur de niveau destiné à la détermination et la surveillance d'un niveau d'un produit dans un réservoir au moyen d'un procédé de mesure du temps de propagation de micro-ondes, comprenant un transmetteur et un arrangement d'antenne (1) tel que décrit dans au moins l'une des revendications 1 à 8.
